# EUROPÄISCHE PATENTSCHRIFT

(11) **EP 0 662 598 B1**
(45) Veröffentlichungstag und Bekanntmachung des Hinweises auf die Patenterteilung: **27.08.1997**
(21) Anmeldenummer: 94119937.4
(22) Anmeldetag: 16.12.1994
(51) Int. Cl.: F41A 25/02, F15B 21/04

(54) **Hydraulische Fülleinrichtung und Verwendung der Fülleinrichtung zur Befüllung und Entlüftung von Waffen-Rohrbremsen und Waffen-Rohrvorholern**
Device for filling a hydraulic liquid and use of such a device for air bleeding and filling the recoil and recuperator system of a gun
Dispositif pour remplir un liquide hydraulique et utilisation d'un tel dispositif pour remplir et désaérer le frein anti-recul et le dispositif de retour en batterie d'un canon

(30) Priorität: 07.01.1994 DE 4400325
(43) Veröffentlichungstag der Anmeldung: 12.07.1995
(73) Patentinhaber: Rheinmetall Industrie Aktiengesellschaft, 40880 Ratingen (DE)
(72) Erfinder: Lipp, Herbert, D-40468 Düsseldorf (DE)

(56) Entgegenhaltungen:
- DE-A- 2 254 814
- DE-A- 2 604 605
- DE-A- 3 733 215
- DE-C- 3 015 097
- FR-A- 2 362 293
- US-A- 3 538 682
- US-A- 4 410 100

## Beschreibung

Die Erfindung betrifft eine hydraulische Fülleinrichtung zum Befüllen und Entlüften von Waffenrohrbremsen und Waffenrohrvorholern nach dem Oberbegriff des Patentanspruchs 1.

Derartige Fülleinrichtungen sind an sich bekannt und dienen zur Grund- oder Wartungsfüllung von beispielsweise aus der DE-30 15 097 C2 bekannten hydraulischen Rohrbremsen bzw. Rohrvorholern von Artilleriewaffen. Die Fülleinrichtung besteht dabei im wesentlichen aus einem die Hydraulikflüssigkeit enthaltenden Tank, einer Pumpe mit Fülleitung und ggf. einer Steuervorrichtung, wie sie z.B. aus der DE-37 33 215 A1 (nächtstliegender Stand der Technik) bekannt ist.

Lufteinschlüsse im Ölraum hydraulischer Stellglieder sind häufig für deren Fehlfunktionen verantwortlich. So bewirken beispielsweise Lufteinschlüsse im Ölraum von Waffen-Rohrbremsen oder entsprechenden Rohrvorholern beim Rücklauf des Rohres unkontrollierbare Druckanstiege und beim Vorlauf des Rohres Pufferungen. Die hydraulischen Stellglieder müssen daher in der Regel luftfrei mit der entsprechenden Hydraulikflüssigkeit (z.B. Öl) gefüllt werden, d.h. während des Füllvorganges und im Anschluß daran müssen die Stellglieder gründlich entlüftet werden.

Es ist bekannt, die hydraulischen Stellglieder manuell zu entlüften. Hierzu befindet sich an dem jeweiligen Stellglied ein Entlüftungsanschluß, an dem ein Entlüftungsschlauch befestigt wird. Der Entlüftungsschlauch hängt bei dem Entlüftungsvorgang mit seinem dem Entlüftungsanschluß abgewandten Ende in einem in der Regel offenem Gefäß (Eimer, Dose o.ä.).

Nachteilig ist bei dieser bekannten manuellen Entlüftung, daß das austretende Hydrauliköl schäumend in das offene Gefäß spritzt. Es besteht daher die Gefahr, daß sich das Wartungspersonal mit Öl beschmutzt und die Umwelt zusätzlich belastet wird. Außerdem besteht für das Wartungspersonal die Gefahr einer gesundheitlichen Schädigung, da das Öl gering toxisch ist. Das entnommene Hydrauliköl muß anschließend über ein Filtersystem gereinigt und kann erst dann dem hydraulischen Element wieder zugeführt werden. Allerdings wird in der Regel das beim Entlüftungsvorgang entnommene Öl nicht dem Kessel wieder zugeleitet, sondern relativ aufwendig entsorgt.

Der Erfindung liegt die Aufgabe zugrunde, die eingangs erwähnte hydraulische Fülleinrichtung auf einfache Weise derart weiterzuentwickeln, daß beim Entlüften entsprechender hydraulischer Stellglieder durch die herausspritzende Hydraulikflüssigkeit keine die Umwelt belastende Verschmutzungen auftreten. Außerdem sollen mit der Entlüftung keine Gesundheitsgefahren für das Wartungspersonal verbunden sein.

Diese Aufgabe wird durch die Merkmale des kennzeichnenden Teiles des Anspruchs 1 gelöst. Weitere vorteilhafte Ausgestaltungen der Erfindung offenbaren die Unteransprüche.

Im wesentlichen liegt der Erfindung der Gedanke zugrunde, den Entlüftungsschlauch nicht wie bisher in ein offenes Gefäß einzuführen, sondern mit dem Tank der Fülleinrichtung zu verbinden. Über den Entlüftungsschlauch fließt dann beim Entlüften des jeweiligen Stellgliedes der Schaum der Hydraulikflüssigkeit direkt in den Tank der Fülleinrichtung zurück. Diese Hydraulikflüssigkeit kann bei der Fortsetzung des Füllvorganges dem Stellglied wieder zugeführt werden.

Weitere Einzelheiten und Vorteile der Erfindung ergeben sich aus dem folgenden anhand einer Figur erläuterten bevorzugten Ausführungsbeispiel.

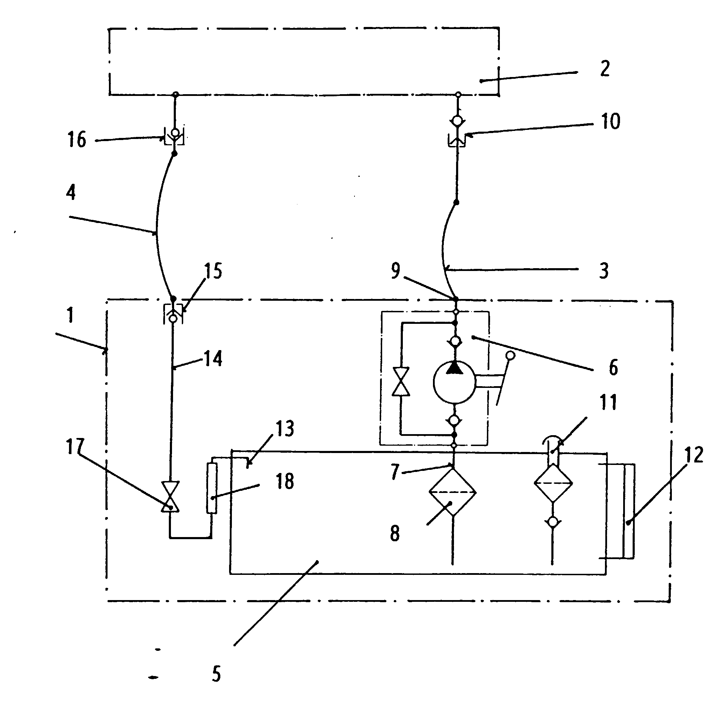

In der Figur ist mit 1 eine erfindungsgemäße Fülleinrichtung und mit 2 ein an sich bekanntes zu befüllendes hydraulisches Stellglied, z.B. die Rohrbremse einer Artilleriewaffe, bezeichnet. Die Fülleinrichtung 1 und die Rohrbremse 2 sind über einen Füllschlauch 3 und einen Entlüftungsschlauch 4 miteinander verbunden.

Die Fülleinrichtung 1 besteht im wesentlichen aus einem mindestens teilweise mit Hydrauliköl gefüllten Tank 5 und einer Pumpe 6. Bei der Pumpe 6 kann es sich beispielsweise um eine Kolbenhandpumpe handeln. Während an dem Sauganschluß der Pumpe 6 ein in den Tank 5 hineinragendes Saugrohr 7 mit Saugfilter 8 angeordnet ist, ist der Druckanschluß der Pumpe mit einem Füllanschluß 9 der Fülleinrichtung 1 verbunden. Zwischen diesem Füllanschluß 9 und einem entsprechenden Füllanschluß 10 an der Rohrbremse 2 wird der Füllschlauch 3 befestigt.

Der Tank 5 der Fülleinrichtung 1 besitzt ein Einfüll- und Belüftungsfilter 11 und weist zur Kontrolle des Ölstandes eine Ölstandsanzeige 12 auf. Außerdem ragt das eine Ende 13 einer Entlüftungsleitung 14 in den Tank 5 hinein. Das entsprechende andere Ende der Entlüftungsleitung 14 ist mit einem Entlüftungsanschluß 15 der Fülleinrichtung 1 verbunden. Zwischen diesem Anschluß 15 und einem Entlüftungsanschluß 16 der Rohrbremse 2 wird der Entlüftungsschlauch 4 befestigt.

In der Entlüftungsleitung 14 ist ferner ein Absperrhahn 17 und ein Entlüftungsschauglas 18 angeordnet.

Im folgenden wird kurz auf die Wirkungsweise der erfindungsgemäßen Fülleinrichtung 1, z.B. bei einer Wartungsfüllung, eingegangen: Die Fülleinrichtung 1 wird hierzu mit Hilfe des Füllschlauches 3 und des Entlüftungsschlauches 4 mit der Rohrbremse 2 verbunden. Der Absperrhahn 17 bleibt dabei zunächst geschlossen.

Durch Betätigung der Kolbenhandpumpe 6 wird die Rohrbremse 2 mit Hydrauliköl gefüllt. Die in der Rohrbremse 2 befindliche Luft wird verdichtet. Nach dem Öffnen des Absperrhahnes 17 wird die Rohrbremse 2 über den Entlüftungsschlauch 4 und die Entlüftungsleitung 14 in den Tank 5 entlüftet. Der Entlüftungsstand kann dabei am Entlüftungsschauglas 18 kontrolliert werden.

Für eine vollständige Entlüftung muß der Vorgang "Füllen/Entlüften" mehrfach wiederholt werden, bis keine Luftblasen mehr in dem Entlüftungsschauglas zu sehen sind.

### Bezugszeichenliste

- 1: hydraulische Fülleinrichtung
- 2: hydraulisches Stellglied, Rohrbremse
- 3: Füllschlauch
- 4: Entlüftungsschlauch
- 5: Tank
- 6: Pumpe
- 7: Saugrohr
- 8: Saugfilter
- 9,10: Füllanschlüsse
- 11: Einfüll- und Belüftungsfilter
- 12: Ölstandsanzeige
- 13: Ende der Entlüftungsleitung
- 14: Entlüftungsleitung
- 15,16: Entlüftungsanschlüsse
- 17: Absperrhahn
- 18: Entlüftungsschauglas

## Patentansprüche

1. Hydraulische Fülleinrichtung zum Befüllen mit Hydraulikflüssigkeit und Entlüften von hydraulischen Waffenrohrbremsen oder Waffenrohrvorholern (2), wobei die Fülleinrichtung (1) einen die Hydraulikflüssigkeit enthaltenden Tank (5) sowie eine Pumpe (6) und die Waffenrohrbremse oder der Waffenrohrvorholer (2) jeweils einen Füllanschluß (10) und einen Enlüftungsanschluß (16) aufweisen, und daß bei bestimmungsgemäßer Verwendung der Fülleinrichtung (1) diese über eine Fülleitung (3) mit dem Füllanschluß (10) verbindbar ist, **dadurch gekennzeichnet**, daß an dem Tank (5) eine Entlüftungsleitung (4/14) angeschlossen ist, die während des Befüllungs- und Entlüftungsvorganges mit dem Entlüftungsanschluß (16) der Waffenrohrbremse oder des Waffenrohrvorholers (2) verbunden ist, und daß die Entlüftungsleitung (4/14) einen Absperrhahn (17) aufnimmt, und daß zwischen dem Absperrhahn (17) und dem Tank (5) in der Entlüftungsleitung (14) ein Entlüftungsschauglas (18) angeordnet ist.

## Claims

1. Hydraulic filling device for filling and air bleeding gun recoil or recuperator systems (2), the filling device (1) having a tank (5), containing the hydraulic fluid and a pump (6), the recoil or recuperator system (2) respectively have a filling connection (10) and a bleed connection (16), the filling device (1) when in use in accordance with the purpose being connectable with the filling connection (10) through a filling line (3), characterised by the fact that a bleed line (4/14) is connected to the tank (5) and, during the filling or bleeding process, is connected to the bleed connection (16) of the recoil or recuperator system (2), and that the bleed line (4/14) accommodates a shut-off valve (17) and that a bleed sight glass (18) is provided between the shut-off valve (17) and the tank (5) in the bleed line (14).

## Revendications

1. Dispositif de remplissage hydraulique pour le remplissage avec un liquide hydraulique et pour la purge d'air de freins hydrauliques de tube d'arme ou de récupérateurs (2) de tube d'arme, dans lequel le dispositif de remplissage (1) comporte un réservoir (5), contenant le liquide hydraulique ainsi qu'une pompe (6) et le frein de tube d'arme ou le récupérateur (2) de tube d'arme comportent chacun un branchement de remplissage (10) et un branchement de purge d'air (16), et dans lequel, en cas d'utilisation réglementaire du dispositif de remplissage (1), celui-ci peut être relié au branchement de remplissage (10), par une conduite de remplissage (3), caractérisé en ce qu'au réservoir (5) est raccordée une conduite de purge d'air (4/14), qui pendant l'opération de remplissage et de purge d'air est reliée au branchement de purge d'air (16) du frein de tube d'arme ou du récupérateur (2) de tube d'arme, et en ce que la conduite de purge d'air (4 ; 14) loge un robinet d'arrêt (17), et en ce qu'entre le robinet d'arrêt (17) et le réservoir (5) un regard de purge d'air (18) est placé dans la conduite de purge d'air (14).
